# EUROPÄISCHE PATENTANMELDUNG

(11) **EP 0 862 848 A1**
(43) Veröffentlichungstag der Anmeldung: **09.09.1998**
(21) Anmeldenummer: 98103559.5
(22) Anmeldetag: 28.02.1998
(51) Int. Cl.: A01F 12/30

(54) **Mähdrescher**

(30) Priorität: 07.03.1997 DE 19709400
(71) Anmelder: Deere & Company, Moline, Illinois 61265-8098 (US)
(72) Erfinder: Perez-Lopez, Antonio, 66497 Contwig (DE)
(74) Vertreter: Feldmann, Bernhard

(57) **Zusammenfassung**

Bekannte Mähdrescher weisen oberhalb ihrer Schüttler unterschlächtig fördernde Zinkenförderer, oberschlächtig fördernde Pick-up-förderer oder oberschlächtig fördernde Zahnleistenförderer auf, die jeweils auf ihre Weise eine zusätzliche Abscheidung von Restkörnern aus dem Erntegut bewirken sollen. Neben einem z. T. komplizierten Aufbau fallen bei diesen bekannten Vorrichtungen auch eine ungenügende Abscheidung wie auch Verstopfungsanfälligkeit an.

Es wird ein Mähdrescher (10) mit einem Rotor (42) oberhalb von Schüttlern (30) vorgeschlagen, der mit Mitnehmern (48) oberschlächtig fördert.

Mähdrescher werden industriell hergestellt und in der Landwirtschaft eingesetzt.

## Beschreibung

Die Erfindung betrifft einen Mähdrescher mit Schüttlern und einem oberhalb der Schüttler drehbar gelagerten Rotor mit exzentrisch in ihm gelagerten Mitnehmern.

Die DE-OS-1 904 406 offenbart einen Mähdrescher mit einem unterschlächtig fördernden Zinkenrotor oberhalb von Strohschüttlern. Dieser Zinkenrotor setzt sich aus einem Rotorgehäuse, einer darin exzentrisch gelagerten Welle und auf der Welle drehbar gelagerten und sich durch die Wandung des Rotorgehäuses erstreckenden Zinken zusammen. Während der Drehung des Rotorgehäuses werden die an der Unterseite des Rotorgehäuses am weitesten herausragenden Zinken in der Förderrichtung der Strohschüttler bewegt und reißen die Strohmatte auseinander, wodurch eine Erhöhung der Abscheidung noch im Stroh befindlicher Körner stattfindet. Zur Steigerung der Abscheidung sind die Zinken entweder über Taumelscheiben auf der Welle befestigt, oder die Welle wird mittels eines Exzentermotors ständig axial bewegt. Auf diese Weise bewegen sich auch die freien Zinkenenden in der Axialrichtung des Rotors und reißen die Strohmatte noch weiter auseinander.

Aus der DE-OS-22 35 061 geht ein Mähdrescher hervor, in dessen Bereich zwischen Strohschüttlern und einer Strohhaube sich ein Pick-up-ähnlicher Überkopfförderer befindet. Dieser Überkopfförderer nimmt in einem vorderen Bereich der Strohschüttler Stroh auf und gibt es dahinter wieder ab. In dem darunter befindlichen Bereich kann das Kurzstroh abgeschieden werden. Der Überkopfförderer kann auch im Anschluß an einen Schüttler vorgesehen werden. Eine ähnliche Vorrichtung ist auch aus der FR-PS-1.473.891 und der DE-AS-2 103 981 bekannt, wobei die in der letztgenannten Schrift genannte Vorrichtung zusätzlich in eine Außerbetriebsstellung gebracht werden kann.

Gemäß der GB-PS-698,324 ist oberhalb eines Strohschüttlers ebenfalls ein Überkopfförderer vorgesehen, der aus einer Trommel und darauf nachlaufend ausgerichteten Zahnleisten besteht.

Die DE-OS-2 431 588 lehrt einen Zusatzabscheider im Abgabebereich der Dreschvorrichtung eines Mähdreschers, der auf einem Rotor beweglich bzw. federnd gelagerte Mitnehmer aufweist, die das Erntegut unterschlächtig fördern. Die Mitnehmer sind zwar nachgiebig, erstrecken sich aber stets mit ihrer vollen Länge in das Erntegut. Es wird auch vorgeschlagen, mehrere derartiger Zusatzabscheider hintereinander vorzusehen.

Der DE-C3-42 09 020 zufolge wird eine Überkopf fördernde Abscheidetrommel zwischen eine Dreschvorrichtung und Strohschüttler eingefügt, die das aus der Dreschvorrichtung kommende gedroschene Gut auffängt und abbremst, so daß in dem Gutgemenge enthaltene Körner auf die Oberfläche der Abscheidetrommel zu liegen kommen, während das Stroh auf die Strohschüttler weitergegeben wird.

Die DE-A1-41 27 118 zeigt einen Mähdrescher mit Strohschüttlern und einem sich oberhalb von diesen befindlichen sogenannten Querschüttler, der das Erntegut unterschlächtig fördert. Vor dem Querschüttler ist ein ebenfalls unterschlächtig förderndes Mitnehmerband vorgesehen, das die Gutmatte aufreißt und mit hoher Geschwindigkeit in den Spalt zwischen den Querschüttler und den Strohschüttler einwirft.

Das der Erfindung zugrunde liegende Problem wird darin gesehen, daß insbesondere bei Mähdreschern mit einer großen Durchsatzleistung noch keine voll befriedigende zusätzliche Abscheidevorrichtung gefunden ist.

Dieses Problem wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Auf diese Weise sind mit den z. B. als Finger oder Zinken ausgebildeten stabförmigen Mitnehmern das Erntegut durchdringende und dieses sowohl fördernde als auch auflockernde Mittel vorgesehen, und die Förderung Überkopf des Rotorgehäuses lockert das Erntegut so auf, daß darin enthaltene Körner aus der Gutmatte entfallen können.

Die Möglichkeit, die Lage des Rotors gegenüber den Schüttlern zu verändern, läßt es zu, die für jedes Erntegut optimale Stellung zu finden.

Eine weitere Anpassung des Rotors an das Erntegut ist möglich, wenn dessen Drehzahl veränderbar ist, wobei 100 bis 200 Upm unter allgemeinen Bedingungen gute Ergebnisse versprechen.

Durch eine Veränderung der Neigung der Mitnehmer in der radialen Ebene kann die Förderaggresivität des Rotors verändert und somit auch Wickelprobleme vermieden werden.

Wenn die aus dem Rotorgehäuse herausragenden Enden der Mitnehmer auch quer zur Förderrichtung eingestellt und während des Betriebs festgestellt werden können, ist eine zusätzliche Lockerung des Ernteguts wie auch dessen seitliche Bewegung möglich. Diese Möglichkeit wird durch die Lagerung der Mitnehmer mit seitlicher Schwenkmöglichkeit einerseits auf einer Achse oder einem Teil von dieser, die in Axialrichtung, d. h. quer zur Förderrichtung verstellbar sind, und andererseits in dem Rotorgehäuse erreicht.

Die Verwendung eines Drehrichtungsumkehrgetriebes läßt nicht nur eine in Einzelfällen günstigere unterschlächtige Förderung, sondern auch einen Reversierbetrieb zum Aufheben von evtl. Verstopfungen zu.

Die Auflockerung und Abscheidung des Ernteguts mittels des vorteilhaften Rotors kann erhöht werden, wenn mehrere solcher unter- oder oberschlächtig fördernden Rotoren hintereinander, und zwar insbesondere unmittelbar hintereinander vorgesehen werden, wobei das Erntegut von einem Rotor auf den folgenden Rotor übergeben wird. Ein sehr wirkungsvoller Abscheideeffekt stellt sich ein, wenn der Rotor oberhalb des aufnahmeseitigen bis mittigen Bereichs der Schüttler vorgesehen wird.

In der Zeichnung ist ein nachfolgend näher beschriebenes Ausführungsbeispiel der Erfindung dargestellt. Es zeigt:
- Figur 1: einen erfindungsgemäßen Mähdrescher und
- Figur 2: einen Rotor des Mähdreschers in Seitenansicht.

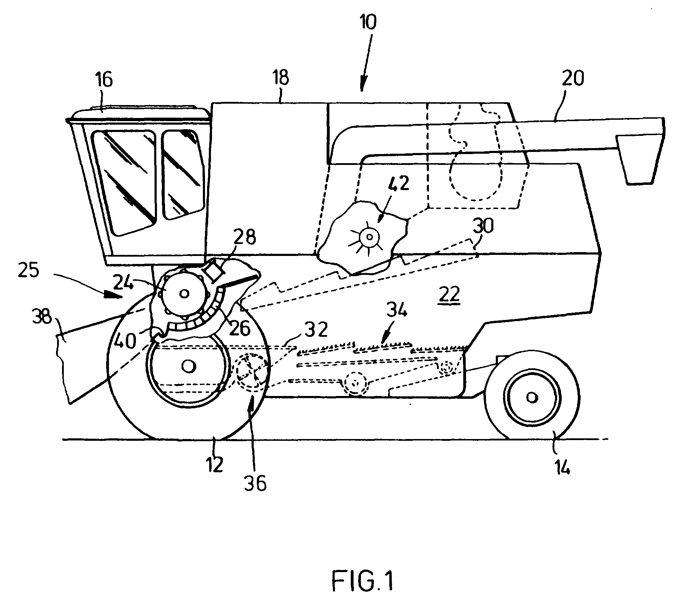

Ein in Figur 1 gezeigter erfindungsgemäßer Mähdrescher 10 ist auf vorderen angetriebenen und rückwärtigen lenkbaren Rädern 12 bzw. 14 getragen und weist eine Fahrerkabine 16 auf, von der aus sie von einem Fahrer bedient werden kann. Anstatt eines Mähdreschers könnte ebenso eine stationäre Dreschmaschine, eine Versuchs-Dreschanlage oder dergleichen in Frage kommen. An die Fahrerkabine 16 schließt sich rückwärtig ein Korntank 18 an, der in ihn abgegebenes Gut über ein Entleerrohr 20 nach außen abgeben kann. Der Korntank 18 lagert auf einem Rahmen 22, in dem zugeführtes Gut auf dem Weg über eine Dreschtrommel 24, einen Dreschkorb 26 und eine Wendetrommel 28 in seine großen und kleinen Bestandteile zerlegt wird. Auf daran anschließenden Schüttlern 30, sowie auf einem Vorbereitungsboden 32 und Sieben 34, wird eine weitere Trennung des geernteten Guts durchgeführt, wobei schließlich der ausgedroschene Gutanteil in den Korntank 18 gefördert wird, die großen Erntegutteile über die Schüttler 30 auf den Boden abgelegt werden und leichte Bestandteile mittels eines Gebläses 36 von den Sieben 34 ebenfalls auf den Boden geblasen werden. Auf dem Boden liegendes oder stehendes Gut wird über einen Schrägförderer 38 und eine Steinfangmulde 40 der Dreschtrommel 24 zugeführt, nachdem es von einer nicht gezeigten Erntegutbergungsvorrichtung vom Boden aufgenommen worden ist.

Oberhalb der Schüttler 30 ist um eine quer zur Fahrtrichtung angeordnete Drehachse ein als Zusatzabscheider dienender Rotor 42 vorgesehen. Der Rotor 42 setzt sich aus einem Rotorgehäuse 44, einer Achse 46 und Mitnehmer 48 zusammen.

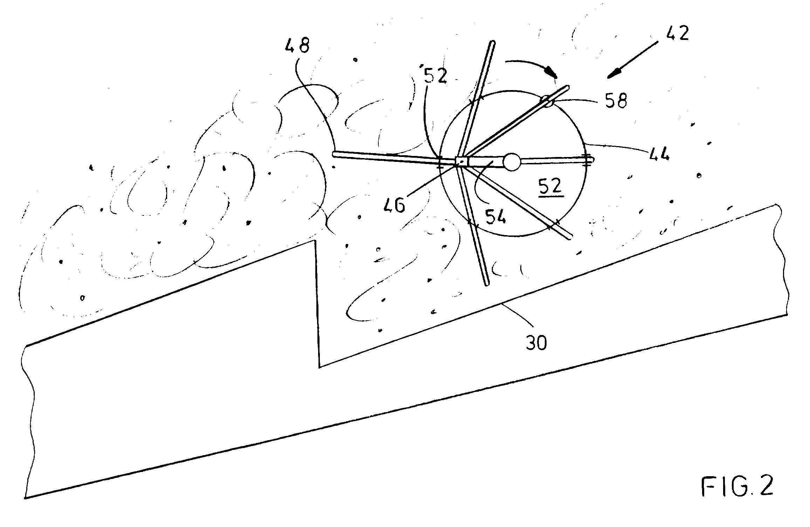

Das Rotorgehäuse 44 ist rundzylindrisch ausgebildet und enthält eine Vielzahl von Öffnungen 50, die in parallel zu der Dreh- und Längsmittenachse der des Rotorgehäuses 44 verlaufenden Reihen und mit Abstand zueinander angeordnet sind, um jeweils einen Mitnehmer 48 in sich beweglich aufzunehmen. Das Rotorgehäuse 44 ist auf nicht gezeigte Weise in den Seitenwänden oder dem Rahmen 22 des Mähdreschers 10 drehbar gelagert. Die Drehung erfolgt mit Blick auf Figur 2 im Uhrzeigerdrehsinn, d. h. oberschlächtig fördernd. Hierzu sind ebenfalls nicht gezeigte Antriebsmittel z. B. eine mit Stirnwänden 52 des Rotorgehäuses 44 drehfest verbundene Riemenscheibe vorgesehen, die einen von einem Motor kommenden Antrieb einleitet.

Die Stellung des Rotorgehäuses 44 befindet sich vorzugsweise - aber nicht ausschließlich - im Mittenbereich oberhalb der Schüttler 30. Diese Stellung kann mittels einer entsprechenden Führung vertikal wie auch horizontal geändert werden

Alternativ könnte der Rotor 42 auch unmittelbar stromabwärts der Wendetrommel 28 vorgesehen werden.

Die Antriebsmittel können auf vielfältige Weise ausgestaltet sein und z. B. ein geschwindigkeitsvariables und/oder drehrichtungsumkehrbares Getriebe enthalten, mit dem die Drehzahl des Rotorgehäuses 44 geändert und dessen Drehrichtung umgekehrt werden kann.

Auf diese Weise kann der Rotor 42 sowohl ober- als auch unterschlächtig fördernd angetrieben werden, wobei gegebenenfalls die Stellung der Hebel 54 und somit auch die der Mitnehmer 48 entsprechend angepaßt werden muß.

Die Achse 46 ist in dem Rotorgehäuse 44 exzentrisch auf Hebeln 54 gelagert und nimmt in Mitnehmerhaltern 56 die Mitnehmer 48 drehbar und axial fest auf. Die Stellung der Hebel 54 kann auf nicht gezeigte aber an sich bekannte Weise verstellt werden, wodurch sich die Neigung der Mitnehmer 48, deren jeweiliger Überstand über das Rotorgehäuse 52 und somit deren Eingriff in das Fördergut verändern läßt.

Die Mitnehmer 48 sind als gerade Stäbe ausgebildet, können aber auch der Drehrichtung nachlaufend geformt werden. Die Mitnehmer 48 sind alle von gleicher Länge, stehen aber aufgrund der exzentrischen Lage der Achse 46 in dem Rotorgehäuse 44 unterschiedlich weit über dieses nach außen über. Die Mitnehmer 48 sind mittels der Mitnehmerhalter 56 drehbar auf der Achse 46 und in Lagerkugeln 58 in dem Rotorgehäuse 44 schwenkbar gelagert und haben die Aufgabe, das Fördergut oberschlächtig, d. h. Überkopf von einem vorderen Abschnitt der Schüttler 30 zu einem rückwärtigen Abschnitt zu fördern.

Die bisherige Beschreibung zeigt, daß der Aufbau des Rotors 42 und dessen Anbringung im wesentlichen dem Aufbau und der Anbringung des Mittenbereichs einer Förderschnecke eines Schneidwerks oder einer Pick-Up entspricht, die hinlänglich bekannt sind.

## Patentansprüche

1. Mähdrescher (10) mit Schüttlern (30) und einem oberhalb der Schüttler (30) drehbar gelagerten Rotor (42) mit exzentrisch in ihm gelagerten Mitnehmern (48), dadurch gekennzeichnet, daß der Rotor (42) oberschlächtig fördert und die Mitnehmer (48) stabförmig ausgebildet sind.

2. Mähdrescher nach Anspruch 1, dadurch gekennzeichnet, daß die Lage des Rotors (42) gegenüber den Schüttlern (30) horizontal und/oder vertikal änderbar ist.

3. Mähdrescher nach Anspruch 1 oder 2, dadurch gekennzeichnet, daß die Umdrehungszahl des Rotors (42) veränderbar ist und vorzugsweise 100 bis 200 Upm beträgt.

4. Mähdrescher nach einem oder mehreren der vorherigen Ansprüche, dadurch gekennzeichnet, daß die Neigung der Mitnehmer (48) insbesondere in der Umfangsrichtung verstellbar ist.

5. Mähdrescher nach einem oder mehreren der vorherigen Ansprüche, dadurch gekennzeichnet, daß die Mitnehmer (48) auf einer gegenüber dem Rotor (42) in Axialrichtung verschiebbaren Achse (46) befestigt und in verschiedenen Neigungen innerhalb einer durch die Drehachse des Rotors (42) verlaufenden Ebene festlegbar sind.

6. Mähdrescher nach einem oder mehreren der vorherigen Ansprüche, dadurch gekennzeichnet, daß der Rotor (42) mit einem Drehrichtungsumkehrgetriebe versehen ist.

7. Mähdrescher nach einem oder mehreren der vorherigen Ansprüche, dadurch gekennzeichnet, daß mehrere gleich- oder gegensinnig drehende Rotoren (42) in Reihe angeordnet sind.

8. Mähdrescher nach einem oder mehreren der vorherigen Ansprüche, dadurch gekennzeichnet, daß der Rotor (42) oberhalb des Mittenbereichs der Schüttler (30) angeordnet ist.

9. Mähdrescher nach einem oder mehreren der vorherigen Ansprüche, dadurch gekennzeichnet, daß der Rotor (42) oberhalb eines Aufnahmebereichs der Schüttler (30) angeordnet ist.
